# EUROPÄISCHE PATENTSCHRIFT

(11) **EP 2 680 986 B1**
(45) Veröffentlichungstag und Bekanntmachung des Hinweises auf die Patenterteilung: **08.04.2015**
(21) Anmeldenummer: 12706235.4
(22) Anmeldetag: 22.02.2012
(51) Int. Cl.: B08B 15/04, B24B 55/06, B24B 55/10

(54) **VORRICHTUNG ZUR PROZESSPARALLELEN ABSAUGUNG VON BEI DER BEARBEITUNG EINES WERKSTÜCKS ANFALLENDEN BEARBEITUNGSPRODUKTEN**
DEVICE FOR THE EXTRACTION, PARALLEL TO THE PROCESS, OF PROCESSING PRODUCTS ARISING DURING THE PROCESSING OF A WORKPIECE
DISPOSITIF POUR ASPIRER, PARALLÈLEMENT AU PROCESSUS, DES PRODUITS D'USINAGE FORMÉS LORS DE L'USINAGE D'UNE PIÈCE

(30) Priorität: 04.03.2011 DE 102011013111
(43) Veröffentlichungstag der Anmeldung: 08.01.2014
(73) Patentinhaber: KraussMaffei Technologies GmbH, 80997 München (DE)
(72) Erfinder: EICKENS, Sebastian, 47625 Kevelaer (DE); JANSEN, Markus, 41751 Viersen (DE)
(74) Vertreter: Roider, Stephan
(86) Internationale Anmeldenummer: PCT/EP2012/052965
(87) Internationale Veröffentlichungsnummer: WO 2012/119852

(56) Entgegenhaltungen:
- DE-A1- 2 715 378
- DE-A1- 3 824 047
- DE-A1- 10 152 401
- DE-A1-102006 040 784
- DE-C- 846 215
- GB-A- 1 529 883

## Beschreibung

Die vorliegende Erfindung betrifft eine Vorrichtung zur Absaugung von bei der Bearbeitung eines Werkstücks mittels einer Bearbeitungseinrichtung anfallenden Bearbeitungsprodukten. Insbesondere geht es um die Abführung von Bearbeitungsprodukten, welche in einer Luft- bzw. gasförmigen Strömung durch eine definierte Strömungsführung befördert werden.

Aus der DE4225014C2 ist eine Absaugvorrichtung für Schweiß- oder Schneidanlagen bekannt, bei welcher eine Absaughaube an dem Brenner oder einem Brennerhalter befestigt ist. Die Absaughaube ist über Absaugschläuche mit einem Vakuumerzeuger verbunden, um die beim Schweißen oder Schneiden entstehenden Rauchgase abzusaugen.

Ferner offenbart die DE 27 15 378 A1 eine Vorrichtung gemäss dem Oberbegriff des Anspruchs 1 für Kraftwerkzeuge zum Auffangen und Beseitigen beim Arbeiten abfallender Stoffe. Die Vorrichtung weist zwei Muffen auf, wobei die erste Muffe mittels einer Wurmfeder an einem Maschinenhaltearm und die zweite Muffe mittels federnden Klemmschellen in einer gewünschten Stellung auf der ersten Muffe festgehalten werden. Die erste Muffe umgibt achsgleich das Spannfutter der Maschine. An der zylindrischen Außenwand der zweiten Muffe ist ein Absaugkanal angeformt, der mit einer Staubsaugeeinrichtung verbunden werden kann.

Weiterer technologischer Hintergrund ist den Druckschriften DE 846 215 C, GB 1 529 883 A, DE 10 2006 040 784 A1 und DE 38 24 047 A1 zu entnehmen.

Der Erfindung liegt die Aufgabe zugrunde, bei der Bearbeitung eines Werkstücks anfallende Bearbeitungsprodukte auch bei Konturbearbeitungen im 3-dimensionalen Bereich sicher abfördern zu können. Insbesondere sollen mit der Erfindung die Bearbeitungsprodukte direkt an ihrem Entstehungsort in eine geeignete Strömung aufgenommen und prozessparallel abgefördert werden können. Die Freiheitsgrade sowie der Bewegungsfreiraum des führenden Bewegungsautomaten sollen, insbesondere bei medienversorgten Werkzeugen, in äußerst geringem Umfang beeinträchtigt werden.

Zur Lösung dieser Aufgabe wird eine Absaug-Vorrichtung mit den Merkmalen von Anspruch 1 vorgeschlagen. Vorteilhafte Ausgestaltungen und Weiterentwicklungen finden sich in den abhängigen Ansprüchen.

Dadurch, dass eine doppelwandige Absaughaube vorgesehen ist, welche ein erstes inneres Gehäuseteil und davon beabstandet ein zweites äußeres Gehäuseteil aufweist, wobei die beiden Gehäuseteile koaxial zueinander und teilweise ineinander angeordnet sind, derart dass zwischen den beiden Gehäuseteilen ein Luftkanal gebildet wird, wobei der Luftkanal ein vorderes, auf das Werkstück ausrichtbares Ende und ein diesem Ende gegenüberliegend hinteres Ende aufweist, wobei in dem Luftkanal eine von dem vorderen Ende zu dem hinteren Ende gerichtete Strömung erzeugbar ist, und wobei die Absaughaube, insbesondere das innere Gehäuseteil der Absaughaube, zur Aufnahme von zumindest einem Teil der Bearbeitungseinrichtung ausgebildet und mit diesem verbindbar ist, kann am Entstehungsort der Bearbeitungsprodukte eine gezielte Luftströmung erzeugt werden. Die durch eine Druckdifferenz beschleunigte Luft wird innerhalb eines werkzeugumschließenden Luftkanals geführt. Der Luftkanal ist strömungsoptimiert ausgelegt und dadurch optimal für den Transport von Partikeln in der Strömung geeignet. Durch die Vermeidung von Strömungshindernissen oder Widerständen werden nachteilige Verwirbelungen oder Strömungsabrisse vermieden.

Die doppelwandige Ausführung der Absaughaube bietet darüber hinaus den Vorteil, dass nahezu keine Bearbeitungsprodukte als beschleunigte Partikel auf das in die Strömung hineinragende Werkzeug auftreffen. Dies gilt insbesondere dann, wenn das innere Gehäuseteil der Absaughaube eine schützende dünnwandige Ummantelung bildet, die zumindest teilweise über die Bearbeitungseinrichtung gestülpt wird. Die Befestigung dieser Schutzummantelung, welche gleichzeitig die Funktion des ersten inneren Gehäuseteils und somit die innere Wandung des strömungsführenden Kanals übernimmt, kann in die Anschlussklemmung zum Bewegungsautomaten der gesamten Bearbeitungsvorrichtung integriert sein. Das innere Gehäuseteil ist an seinem dem Werkstück zugewandten Ende mit einer Öffnung bzw. einem Durchbruch versehen. Dies ermöglicht die Verbindung vom Werkzeugantrieb zur eigentlichen Werkzeugaufnahme, welche wiederum die Drehmomentübertragung des Antriebs zum Werkzeug selbst sicherstellt. Ein geringes Spaltmaß dieses Durchbruchs zur Werkzeugaufnahme lässt einen definierten Austritt an Sperrluft der Überdruckkapselung des Antriebs in den freien Strömungsbereich der Absaughaube zu und verhindert somit im Betrieb, auch ohne eine mechanisch geschlossene Einhausung, einen Eintritt von Partikeln in das Antriebsgehäuse.

Das zweite äußere Gehäuseteil der Absaugvorrichtung, d.h. die äußere Ummantelung des Strömungskanals, kann vorzugsweise ebenfalls aus einem stabilen Flachmaterial gefertigt sein. Je nach Anwendungsfall, Größe des Werkzeugantriebs, Art des Werkzeuges oder Menge und Größe der abzufördernden Bearbeitungsprodukte ist das zweite äußere Gehäuseteil in einem definierten Abstand zum inneren Gehäuseteil angeordnet. D.h. zwischen der inneren und äußeren Wandung des strömungsführenden Luftkanals wird ein definierter Abstand gebildet. Durch die Wahl dieses Abstandsmaßes kann man den Strömungsquerschnitt und den damit verbundenen Volumenstrom und die Strömungsgeschwindigkeit gezielt variieren. Ebenfalls wird durch die Querschnittsbegrenzung die Größe der förderbaren Bearbeitungsprodukte eingestellt.

Vorteilhaft kann zwischen dem vorderen Ende des inneren Gehäuseteils und dem vorderen Ende des äußeren Gehäuseteils ein Raum zur Aufnahme von einem vorderen Endabschnitt der Bearbeitungseinrichtung vorgesehen werden. Außerdem kann vorteilhafterweise das innere Gehäuseteil einen Bereich mit einem Innendurchmesser aufweisen, der geringfügig größer ist als der Aussendurchmesser der inneren Bearbeitungseinrichtung in diesem Bereich, so dass das innere Gehäuseteil in diesem Bereich zur vorzugsweise passgenauen Aufnahme von zumindest einem Teil der Bearbeitungseinrichtung ausgebildet ist, insbesondere zur Aufnahme und Befestigung der Antriebseinheit. Besonders vorteilhaft kann das äußere Gehäuseteil ein konisch zulaufendes vorderes Endstück aufweisen, welches vorzugsweise an die Kontur der Bearbeitungseinrichtung in diesem Bereich angepasst ist. In diesem Bereich kann die Werkzeugaufnahme und das Werkzeug angeordnet werden. Im Ergebnis verlängert somit das äußere Gehäuseteil die strömungsführende Umhausung der Absaugeinrichtung bis an den Einsatzbereich des Bearbeitungswerkzeugs, sodass gezielt die entstehenden Bearbeitungsprodukte unmittelbar nach Ihrer Entstehung in der freien Strömung in eine geführte definierte Strömung aufgenommen werden können. Die Bauform des äußeren Gehäuseteils ist an die notwendigen Strömungsquerschnitte angepasst. Sie weist vorzugsweise eine glatte Oberfläche und eine schlanke Geometrie auf. Damit ist die erfindungsgemäße Absaugvorrichtung bestens für den Einsatz an Bewegungsautomaten geeignet.

Diese neuartige, an die Gegebenheiten wie Antriebseinheit und Werkzeugart angepasste und weitestgehend integrierte Bauform, bietet kleinstmögliche Störkonturen und ermöglicht somit eine maximale Ausnutzung der Freiheitsgrade und Bewegungsmöglichkeiten der eingesetzten Bewegungsautomaten, insbesondere bei komplexen dreidimensionalen Konturbearbeitungen. Die Strömungsführung für den Transport von Bearbeitungsprodukten ist somit integrierter Bestandteil der Bearbeitungseinheit.

Am oberen Ende des Strömungskanals wird die werkzeugumhüllende Strömung wieder zentral zusammengeführt und über eine Strömungsumlenkkammer zu einem Anschlussstutzen geführt. An diesem Anschlussstutzen kann eine standardisierte weiterführende Strömungsleitung angeschlossen werden, welche ihrerseits beispielsweise an einen geeigneten Unterdruckerzeuger anschließbar ist.

In einer bevorzugten Ausführungsform wird am unteren Ende des Strömungskanals als Dichtelement zum bearbeitenden Produktteil ein Bürstenaufsatz bzw. ein Borstenring vorgesehen, welcher beispielsweise an die äußere Wandung des Strömungskanals lösbar angebracht werden kann. Diese Bürste dient der flexiblen Kapselung des unmittelbaren Bearbeitungsbereichs. Durch die ringförmig umlaufenden Borsten werden durch den Bearbeitungsprozess beschleunigte Partikel daran gehindert, den Einflussbereich der gerichteten Luftströmung und damit der Partikel-Transportströmung zu verlassen. Weiterhin ermöglicht dieser Borstenabschluss einen mechanischen, jedoch flexiblen Dichtkontakt zu dem zu bearbeitenden Werkstück. Hierdurch wird die Strömungswirkung in optimale Nähe des Entstehungsortes der abzuführenden Bearbeitungsprodukte gebracht; eine Strömungssättigung bereits vor dem Erreichen dieser Position durch einströmende Fremdmedien kann somit weitestgehend vermieden werden. Die Fasern der Bürste können in einer speziellen Ausführungsvariante aus Materialien bestehen, die eine elektrostatische Aufladung des zu bearbeitenden Werkstücks in diesem Bereich oder der Borsten selbst, vermeiden. Der zur Fixierung der Borsten eingesetzte Grundkörper kann aus einem elastischen Material gefertigt sein, was es ermöglicht - je nach Ausführungsvariante - den entsprechenden Durchmesser des unteren Endes des Strömungskanals zu umschlingen.

Gemäß der vorliegenden Erfindung ist das äußere Gehäuseteil als Ganzes oder in ein oder mehreren Teilstücken von der Absaughaube lösbar ausgebildet, wobei die lösbaren Teile des äußeren Gehäuseteils aus einer einen geschlossenen Zustand der Absaughaube bildenden Position in eine einen geöffneten Zustand der Absaughaube bildende Position und umgekehrt bewegbar sind. Mit dieser Möglichkeit kann die komplette Werkzeugaufnahme der Antriebseinheit freigelegt und ein automatischer Werkzeugwechsel durch eine Magazinbestückung durchgeführt werden. Weiterhin bietet dies die Möglichkeit, bei nicht notwendiger Abführung von Bearbeitungsprodukten auch Konturbereiche des zu bearbeitenden Werkstücks zu erreichen, die im geschlossenen Zustand der Absaughaube nicht oder nur mit erhöhtem Aufwand bearbeitet werden können.

Die lösbaren Teile sind jeweils um eine parallel oder orthogonal zur Längsachse der Absaughaube liegende Achse schwenkbar ausgebildet.

Durch diese Technik mit den lösbaren Teilen können Varianten des äußeren Gehäuseteils ausgebildet werden, insbesondere zur Bildung verschiedener Strömungskanäle mit unterschiedlichen Geometrien, Bürstenarten oder Borstenlängen. Die lösbaren Teile und gegebenenfalls passende Bürstenaufsätze können aus einem Magazin vollautomatisch je nach Anwendungsfall entnommen und zu dem äußeren Gehäuseteil mit der gewünschten Geometrie zusammengesetzt werden, Es müssen lediglich die lösbaren Teile der einen Variante gegen lösbare Teile in einer anderen Variante ausgetauscht werden. Die korrekte Positionierung der lösbaren Teile wird durch eine entsprechende Sensorik überwacht.

Als Einsatzgebiete dieser Erfindung sind neben allen klassischen Zerspanungsbearbeitungen in CNC-Maschinen auch Zerspanungsaufgaben in robotergeführten Prozessen aufzuführen. Besonders beim Einsatz von Industrierobotern als flexible führende Bewegungsautomaten sollen bei komplexen Konturbearbeitungen die maschinentypischen Bewegungsmöglichkeiten beim Einsatz von Absaugvorrichtungen zur Beseitigung von Zerspanungsabfällen nicht beeinträchtigt werden. Dies wird mit der vorliegenden Erfindung erreicht. Weiterhin ermöglicht diese Erfindung, speziell bei der zerspanenden Bearbeitung von faserverstärkten Kunststoffen, die kontrollierte Abführung von gesundheits- oder explosionsgefährlichen Stäuben aus dem Bearbeitungsbereich.

Nachfolgend soll die Erfindung anhand von Ausführungsbeispielen und unter Bezugnahme auf die Figuren 1 bis 7b näher beschrieben werden. Es zeigen:
- Fig.1: Seitenansicht von Absaugvorrichtung und Bearbeitungseinrichtung in zerlegtem Zustand;
- Fig.2: Seitenansicht von Absaugvorrichtung und Bearbeitungseinrichtung in zusammengebautem Zustand;
- Fig.3a: Seitenansicht gemäß Fig.2 mit Absaughaube in geschlossenem Zustand;
- Fig.3b: Seitenansicht gemäß Fig.2 mit Absaughaube in geöffnetem Zustand;
- Fig.4a: Seitenansicht gemäß Fig.2 mit Absaughaube in geschlossenem Zustand und mit Linearantriebsmitteln, die nicht unter die Erfindung fallen;
- Fig.4b: Seitenansicht gemäß Fig.2 mit Absaughaube in geöffnetem Zustand und mit Linearantriebsmiteln, die nicht unter die Erfindung fallen;
- Fig.5a: Seitenansicht gemäß Fig.2 mit Saugrohren und in geschlossenem Zustand einer nicht erfindungsgemässen Absaughaube;
- Fig.5b: Seitenansicht gemäß Fig.2 mit Saugrohren und in geöffnetem Zustand der genannten Absaughaube;
- Fig.6a: Seitenansicht gemäß Fig.2 und mit einer ersten Ausführungsform einer Absaughaube mit teilbarem äußerem Gehäuseteil in geschlossenem Zustand;
- Fig.6b: Seitenansicht gemäß Fig.2 und mit einer ersten Ausführungsform einer Absaughaube mit teilbarem äußerem Gehäuseteil in geöffnetem Zustand;
- Fig.7a: Seitenansicht gemäß Fig.2 und mit einer zweiten Ausführungsform einer Absaughaube mit teilbarem äußerem Gehäuseteil in geschlossenem Zustand;
- Fig.7b: Seitenansicht gemäß Fig.2 und mit einer zweiten Ausführungsform einer Absaughaube mit teilbarem äußerem Gehäuseteil in geöffnetem Zustand.

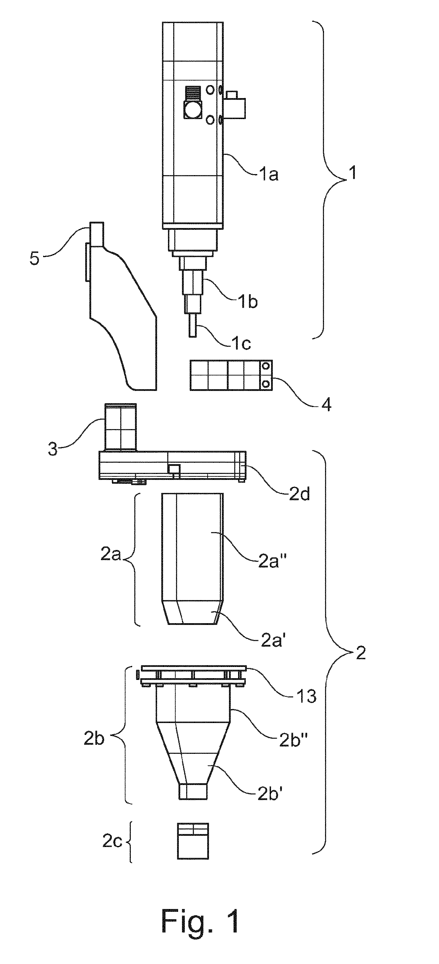

Die Figur 1 zeigt eine schematische Seitenansicht einer Vorrichtung zur Bearbeitung eines Werkstücks mit einer Werkstück-Bearbeitungseinrichtung 1, welche eine Antriebseinheit 1a, eine Werkzeugaufnahmeeinrichtung 1b und ein Werkzeug 1c aufweist. Beispielsweise kann es sich bei der Werkstück-Bearbeitungseinrichtung um eine Fräseinrichtung mit einer Frässpindel 1a und einem Fräswerkzeug 1 c handeln. Die erfindungsgemäße Absaug-Vorrichtung 2 umfasst ein erstes, inneres Gehäuseteil 2a sowie ein zweites, äußeres Gehäuseteil 2b. Die beiden Gehäuseteile 2a und 2b verfügen jeweils über ein konusförmiges vorderes Endstück 2a' bzw. 2b' und dahinterliegende Zylinderstücke 2a" und 2b". Am unteren, im Betrieb dem Werkstück zugewandten Ende, ist ein Bürstenaufsatz 2c vorgesehen. Diesem Ende gegenüberliegend ist eine Strömungsumlenkkammer 2d mit einem Anschlussstutzen 3 vorgesehen, an den ein Schlauch angeschlossen werden kann, welcher mit einem geeigneten Unterdruckerzeuger verbindbar ist. Desweiteren sind in der Figur 1 ein Klemmring 4 und eine Halterung 5 zu sehen. Mittels des Klemmrings 4 kann die Absaug-Vorrichtung 2 an der Antriebseinheit 1 a der Werkstück-Bearbeitungseinrichtung befestigt werden. Die Halterung 5 dient der Befestigung der Einheit aus Werkstück-Bearbeitungseinrichtung 1 und Absaug-Vorrichtung 2 an einem Handhabungsautomaten, beispielsweise an einem Arm eines Industrieroboters.

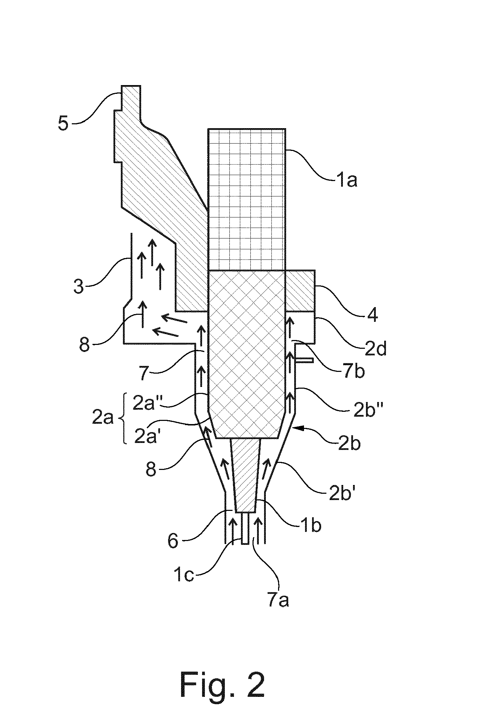

Die Figur 2 zeigt die Anordnung aus der Figur 1 im zusammengebauten Zustand und unter der Annahme, dass ein Unterdruckerzeuger an dem Anschlussstutzen 3 angeschlossen ist. Um die einzelnen Bestandteile besser erkennen zu können, sind einige dieser Bestandteile mit bauteilspezifischen Schraffuren versehen. Die Antriebseinheit 1a ist in dem inneren Gehäuseteil 2a aufgenommen und mittels des Klemmrings 4 an der Antriebseinheit 1a befestigt. Das innere Gehäuseteil 2a erstreckt sich über den gesamten vorderen Abschnitt der Antriebseinheit 1a. Die Länge des inneren Gehäuseteils 2a sowie die Länge und die Kontur des Endstücks 2a' sind so bemessen, dass die Werkzeugaufnahmeeinrichtung 1b zumindest teilweise aus dem inneren Gehäuseteil 2a herausragt. Das äußere Gehäuseteil 2b ist an der Unterseite der Strömungsumlenkkammer 2d befestigt, beispielsweise mittels eines geeigneten Flanschs 13 und die Strömungsumlenkkammer 2d kann ihrerseits mit dem Klemmring 4 verbunden sein. Zwischen dem vorderen Ende des inneren Gehäuseteils 2a und dem vorderen Ende des äußeren Gehäuseteils 2b wird ein Raum 6 zur Aufnahme von einem vorderen Endabschnitt der Bearbeitungseinrichtung 1 gebildet. Vorliegend sind in diesem Raum 6 die Werkzeugaufnahmeeinrichtung 1b und das Werkzeug 1c aufgenommen. Auf diese Weise wird ein Luftkanal 7 zwischen der Aussenseite des inneren Gehäuseteils 2a und der Innenseite des äußeren Gehäuseteils 2b gebildet. Der Luftkanal 7 weist ein vorderes, auf das Werkstück ausrichtbares Ende 7a und ein diesem Ende gegenüberliegendes hinteres Ende 7b auf. Der vorgenannte Raum 6 bildet somit einen Teilabschnitt des Luftkanals 7. In diesem Luftkanal 7 ist eine von dem vorderen Ende 7a zu dem hinteren Ende 7b gerichtete Strömung erzeugbar, welche durch die Pfeile 8 veranschaulicht werden soll. Die Strömung 8 wird in der Strömungsumlenkkammer 2d in Richtung des Anschlussstutzens 3 umgelenkt und in einen hier nicht dargestellten Schlauch geführt, der an einen hier ebenfalls nicht dargestellten Unterdruckerzeuger angeschlossen ist. Je nach Ausgestaltung des vorderen Endes der Absaughaube 2 kann das vordere Ende 7a des Luftkanals 7 am vorderen Ende des äußeren Gehäuseteils 2b oder am vorderen Ende des Bürstenaufsatzes 2c liegen. Es kommt lediglich darauf an, dass am vorderen Ende der Absaughaube 2 ein Unterdruck und somit eine am vorderen Ende der Absaughaube 2 in diese eintretende Strömung 8 erzeugt wird, die die am Bearbeitungsort anfallenden Bearbeitungsprodukte aufnehmen kann. Diese Bearbeitungsprodukte werden dann von der Strömung 8 mitgenommen, um das Werkzeug 1 c und die Werkzeugaufnahmeeinrichtung 1 b herum geführt und im weiteren in den Ringspalt zwischen den beiden Gehäuseteilen 2a und 2b hinein geführt. Das innere Gehäuseteil 2a verhindert somit ein Auftreffen oder ein Eindringen von Bearbeitungsprodukten auf bzw. in die übrigen Bestandteile der Bearbeitungseinrichtung 1.

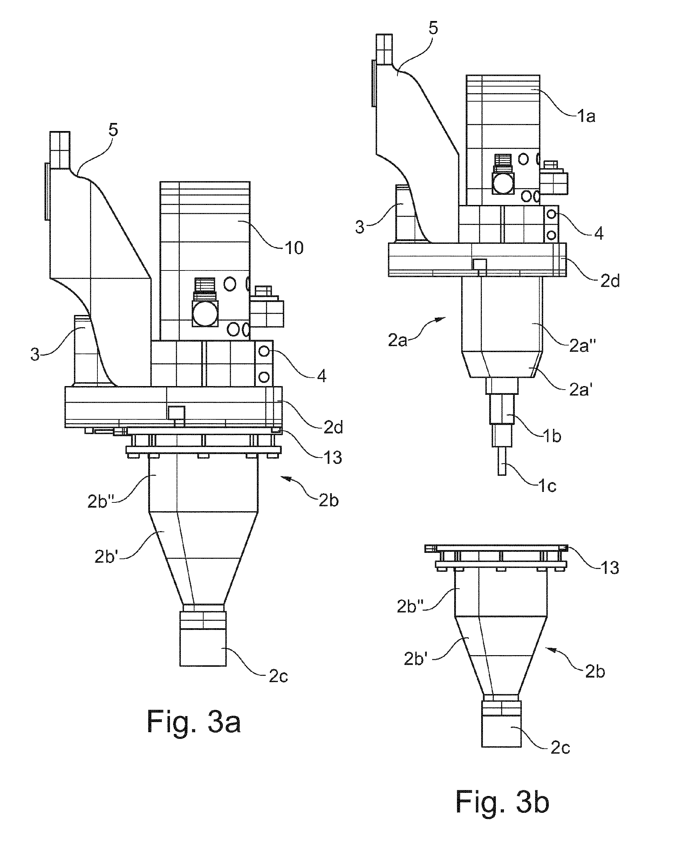

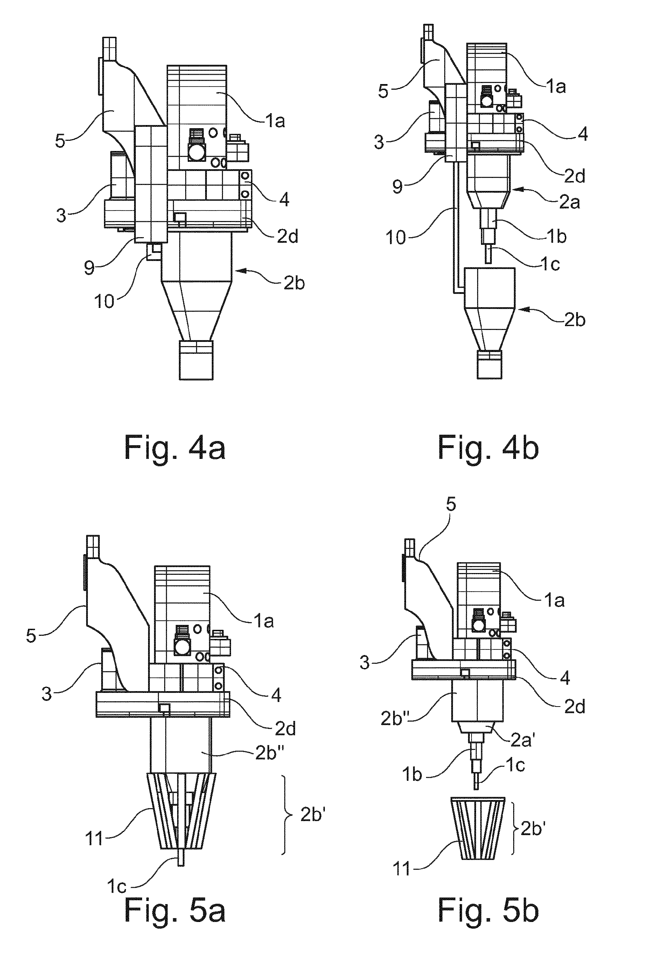

Gemäß einem weiterem Aspekt der Erfindung ist das äußere Gehäuseteil 2b als Ganzes oder in ein oder mehreren Teilstücken von der Absaughaube 2 lösbar ausgebildet, wobei die lösbaren Teile des äußeren Gehäuseteils 2b aus einer einen geschlossenen Zustand der Absaughaube 2 bildenden Position in eine einen geöffneten Zustand der Absaughabe 2 bildende Position und umgekehrt gebracht werden können bzw. bewegbar sind. Die Figur 3a zeigt die Anordnung aus der Figur 1 im zusammengebauten Zustand und im geschlossenen Zustand der Absaughaube 2. Die Figur 3b zeigt einen Zustand, bei dem das äußere Gehäuseteil 2b als Ganzes von der Absaughaube 2 gelöst worden ist, bei der sich die Absaughaube 2 also in einem geöffneten Zustand befindet. Aus der Fgur 3b ist ersichtlich, dass bei geöffnetem Zustand der Absaughaube 2 die Raum 6 und die dort befindlichen Bestandteile 1 b und 1 c der Bearbeitungseinrichtung 1 frei zugänglich sind. Das äußere Gehäuseteil 2b kann von Hand oder maschinell von der Absaughaube 2 gelöst und entfernt werden. Die Figuren 4a und 4b zeigen die Verwendung eines Linearantriebs 9, mit dem beispielsweise eine mit dem äußeren Gehäuseteil 2b verbundene Stange 10 parallel zur Längsachse der Absaugvorrichtung 2 verfahren werden kann. Die Figur 4a zeigt das äußere Gehäuseteil 2b in einer Position, die den geschlossenen Zustand der Absaughaube 2 bildet und die Figur 4b in einer Position, die den geöffneten Zustand der Absaughaube 2 bildet. In Abwandlung von dem hier gezeigten Beispiel kann das äußere Gehäuseteil 2b auch aus mehreren Teilen aufgebaut sein. Beispielsweise können das vordere Endstück 2b' und das dahinterliegende Zylinderstück 2b" voneinander lösbar ausgebildet sein. In diesem Fall kann es genügen, wenn nur das vordere Endstück 2b' von der Absaughaube 2 entfernt wird, um den Raum 6 und die dort befindlichen Bestandteile der Bearbeitungseinrichtung 1 freizulegen.

Ferner muss das vordere Endstück 2b' des äußeren Gehäuseteils 2b nicht notwendigerweise als geschlossenes Gehäuse ausgebildet sein. Man kann auch, wie dies in den Figuren 5a und 5b dargestellt ist, einzelne Saugrohre 11 zu einem Endstück 2b' zusammenfügen und mit dem dahinterliegenden Zylinderstück 2b" verbinden, wobei die Öffnungen der Saugrohre 11 so positioniert werden müssen, dass der oben beschriebene Luftkanal 7 gebildet wird. Das Gehäuseteil 2b kann entweder als Ganzes von der Absaughaube 2 entfernt werden (hier nicht dargestellt) oder es wird nur das vordere Endstück 2b' mit den Saugrohren 11 von der Absaughaube 2 gelöst, wie dieses vorliegend gezeigt ist. Hierzu können in geeigneter Weise angepasste Antriebsmittel 9, 10 verwendet werden, wie dies im Zusammenhang mit den Figuren 4a und 4b beschrieben ist.

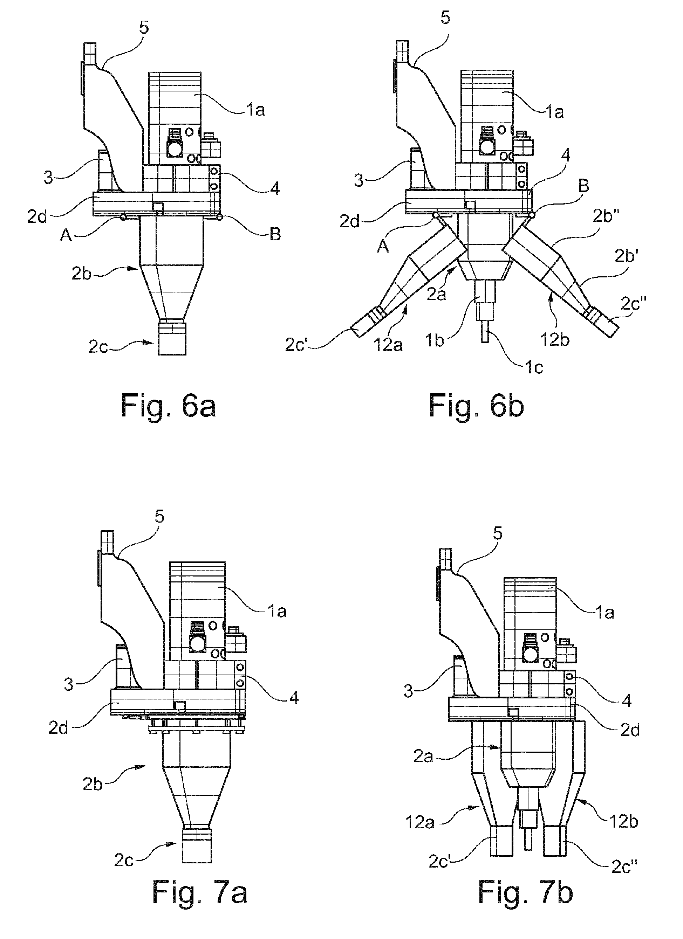

Gemäß einer weiteren Ausgestaltung können die lösbaren Teile des äußeren Gehäuseteils 2b jeweils um eine parallel oder orthogonal zur Längsachse der Absaughaube 2 liegende Achse schwenkbar sein. Diese Ausführungsformen sind in den Figuren 6a/6b sowie 7a/7b dargestellt. Sowohl das äußere Gehäuseteil 2b als auch der Bürstenaufsatz 2c sind zweiteilig ausgeführt, so dass zwei Halbschalen 12a und 12b gebildet werden. Gemäß dem Ausführungsbeispiel der Figuren 6a und 6b sind die beiden Halbschalen 12a und 12b an Achsen A und B gelenkig gelagert, welche orthogonal zur Längsachse der Absaugvorrichtung 2 liegen. Durch eine Schwenkbewegung um die Achsen A und B können die beiden Halbschalen 12a und 12b aus der in der Figur 6a gezeigten Position in die in der Figur 6b gezeigte Position und zurück bewegt werden. Gemäß dem Ausführungsbeispiel der Figuren 7a und 7b sind die beiden Halbschalen 12a und 12b an einer Achse C gelenkig gelagert, welche parallel zur Längsachse der Absaughaube liegt. In den Figuren liegt diese Achse C genau hinter der Längsachse der Absaughaube 2. Durch eine Schwenkbewegung um die Achse C können die Halbschalen 12a und 12b aus der in der Figur 7a gezeigten Position in die in der Figur 7b gezeigte Position und zurück bewegt werden. Durch die zuvor beschriebenen Schwenkbewegungen können die lösbaren Teile 12a und 12b des äußeren Gehäuseteils 2b (hier mit 2c) aus einer einen geschlossenen Zustand der Absaughaube 2 bildenden Position (Figur 6a bzw. Figur 7a) in eine einen geöffneten Zustand der Absaughabe 2 bildende Position (Figur 6b bzw. Figur 7b) und umgekehrt gebracht werden.

### Bezugszeichenliste

- 1: Bearbeitungseinrichtung
- 1a: Antriebseinheit
- 1b: Werkzeugaufnahmeeinrichtung
- 1c: Werkzeug
- 2: Absaugvorrichtung
- 2a: Inneres Gehäuseteil
- 2a': Konisches Endstück
- 2b: Äußeres Gehäuseteil
- 2b': Konisches Endstück
- 2b": Zylinderstück
- 2c: Bürstenaufsatz
- 2c', 2c": Teile bei geteiltem Bürstenaufsatz 2c
- 2d: Strömungsumlenkkammer
- 3: Anschlussstutzen
- 4: Klemmring
- 5: Halterung
- 6: Raum zur Aufnahme von einem vorderen Endabschnitt der Bearbeitungseinrichtung 1
- 7: Luftkanal
- 7a: Vorderes Ende des Luftkanals
- 7b: Hinteres Ende des Luftkanals
- 8: Strömung
- 9: Linearantrieb
- 10: Stange
- 11: Saugrohre
- 12a: Erste Halbschale
- 12b: Zweite Halbschale
- 13: Befestigungsflanschs
- A, B. C: Schwenkachsen

## Patentansprüche

1. Vorrichtung zur Absaugung von bei der Bearbeitung eines Werkstücks mittels einer Bearbeitungseinrichtung (1) anfallenden Bearbeitungsprodukten, mit einer doppelwandigen Absaughaube (2), welche ein erstes inneres Gehäuseteil (2a) und davon beabstandet ein zweites äußeres Gehäuseteil (2b) aufweist, wobei die beiden Gehäuseteile (2a, 2b) koaxial zueinander und teilweise ineinander angeordnet sind, derart dass zwischen den beiden Gehäuseteilen (2a, 2b) ein Luftkanal (7) gebildet wird, wobei der Luftkanal (7) ein vorderes, auf das Werkstück ausrichtbares Ende (7a) und ein diesem Ende gegenüberliegend hinteres Ende (7b) aufweist, wobei in dem Luftkanal (7) eine von dem vorderen Ende (7a) zu dem hinteren Ende (7b) gerichtete Strömung (8) erzeugbar ist, und wobei die Absaughaube (2), insbesondere das innere Gehäuseteil (2a) der Absaughaube (2), zur Aufnahme von zumindest einem Teil der Bearbeitungseinrichtung (1) ausgebildet und mit diesem verbindbar ist,
**dadurch gekennzeichnet dass**
das äußere Gehäuseteil (2b) als Ganzes oder in ein oder mehreren Teilstücken (2b', 11, 12a, 12b) von der Absaughaube (2) lösbar ist, wobei die lösbaren Teile des äußeren Gehäuseteils (2b) aus einer einen geschlossenen Zustand der Absaughaube(2) bildenden Position in eine einen geöffneten Zustand der Absaughaube (2) bildende Position und umgekehrt bewegbar sind, und wobei die lösbaren Teile (12a, 12b) jeweils um eine parallel (C) oder orthogonal (A, B) zur Längsachse der Absaughaube (2) liegende Achse schwenkbar sind.

2. Vorrichtung nach Anspruch 1,
**dadurch gekennzeichnet, dass**
dass zwischen dem vorderen Ende des inneren Gehäuseteils (2a) und dem vorderen Ende des äußeren Gehäuseteils (2b) ein Raum (6) zur Aufnahme von einem vorderen Endabschnitt (1a, 1 b) der Bearbeitungseinrichtung (1) vorgesehen ist.

3. Vorrichtung nach Anspruch 1 oder 2,
**dadurch gekennzeichnet, dass**
das innere Gehäuseteil (2a) einen Bereich (2a") mit einem Innendurchmesser aufweist, der geringfügig größer ist als der Aussendurchmesser der Bearbeitungseinrichtung (1) in diesem Bereich, so dass das innere Gehäuseteil (2a) in diesem Bereich zur vorzugsweise passgenauen Aufnahme von zumindest einem Teil der Bearbeitungseinrichtung (1) ausgebildet ist.

4. Vorrichtung nach einem der vorstehenden Ansprüche,
**dadurch gekennzeichnet, dass**
das äußere Gehäuseteil (2b) ein konisch zulaufendes vorderes Endstück (2b') aufweist, welches vorzugsweise an die Kontur der Bearbeitungseinrichtung (1) in diesem Bereich angepasst ist.

5. Vorrichtung nach einem der vorstehenden Ansprüche,
**dadurch gekennzeichnet, dass**
eine Strömungsumlenkkammer (2d) vorgesehen ist, welche strömungstechnisch mit dem Luftkanal (7) verbunden oder verbindbar ist.

6. Vorrichtung nach einem der vorstehenden Ansprüche,
**dadurch gekennzeichnet, dass**
am vorderen Ende des äußeren Gehäuseteils (2b) ein Bürstenaufsatz (2c) vorgesehen ist, welcher gegebenenfalls teilbar (2c', 2c") ist.

7. Vorrichtung nach einem der vorstehenden Ansprüche,
**dadurch gekennzeichnet, dass**
das äußere Gehäuseteil (2a) und/oder das innere Gehäuseteil (2b) rotationssymmetrisch bezüglich der Längsachse der Absaughaube (2) ausgebildet sind.

8. Vorrichtung zur Bearbeitung eines Werkstücks mit einer Werkstück-Bearbeitungseinrichtung (1), welche eine Antriebseinheit (1a), eine Werkzeugaufnahmeeinrichtung (1 b) und ein in der Werkzeugaufnahmeeinrichtung (1 b) einsetzbares Werkzeug (1 c) aufweist, sowie mit einer Vorrichtung zur Absaugung von bei der Bearbeitung des Werkstücks anfallenden Bearbeitungsprodukten gemäß einem der Ansprüche 1 bis 7.

9. Vorrichtung nach Anspruch 8,
wobei die Antriebseinheit (1a) zur Erzeugung einer Rotationsbewegung des Werkzeugs (1 c) ausgebildet ist.

10. Vorrichtung nach Anspruch 8 oder 9,
wobei als Werkzeug (1 c) ein Zerspanungswerkzeug, insbesondere eine Frässpindel, vorgesehen ist.

11. Vorrichtung nach einem der Ansprüche 8 bis 10,
wobei das Werkzeug (1c) und
gegebenenfalls ein Teil der Werkzeugaufnahmeeinrichtung (1 b) in dem Raum (6) zwischen dem vorderen Ende des inneren Gehäuseteils (2a) und dem vorderen Ende des äußeren Gehäuseteils (2b) angeordnet ist.

12. Vorrichtung nach einem der Ansprüche 8 bis 11,
wobei die Antriebseinheit (1 a)
im wesentlichen luftdicht mit dem Zylinderstück (2a") des inneren Gehäuseteils (2a) verbunden ist.

## Claims

1. A device for the extraction of processing products arising during the processing of a workpiece by means of a processing device (1), with a double-walled extraction hood (2) which has a first inner housing part (2a) and a second outer housing part (2b) spaced apart therefrom, wherein the two housing parts (2a, 2b) are arranged coaxially to each other and partially within each other in such a way that an air channel (7) is formed between the two housing parts (2a, 2b), wherein the air channel (7) has a front end (7a) that can be aligned to the workpiece and a rear end (7b) opposite thereto, wherein a flow (8) directed from the front end (7a) to the rear end (7b) can be created in the air channel (7), and wherein the extraction hood (2), in particular the inner housing part (2a) of the extraction hood (2), is designed to receive at least a part of the processing device (1) and can be connected thereto,
**characterized in that**
the outer housing part (2b) is detachable as a whole or in one or several segments (2b', 11, 12a, 12b) from the extraction hood (2), wherein the detachable parts of the outer housing part (2b) are movable from a position forming a closed state of the extraction hood (2) into a position forming an opened state of the extraction hood (2), and vice versa, and wherein the detachable parts (12a, 12b) are pivotable respectively about an axis lying parallel (C) or orthogonal (A, B) to the longitudinal axis of the extraction hood (2).

2. The device according to Claim 1, **characterized in that** between the front end of the inner housing part (2a) and the front end of the outer housing part (2b) a space (6) is provided to receive a front end section (1a, 1b) of the processing device (1).

3. The device according to Claim 1 or 2, **characterized in that** the inner housing part (2a) has a region (2a") with an internal diameter which is slightly greater than the external diameter of the processing device (1) in this region, so that the inner housing part (2a) in this region is constructed for the preferably accurately fitting receiving of at least a part of the processing device (1).

4. The device according to one of the preceding claims, **characterized in that** the outer housing part (2b) has a conically tapering front end piece (2b') which is preferably adapted to the contour of the processing device (1) in this region.

5. The device according to one of the preceding claims, **characterized in that** a flow deflection chamber (2d) is provided, which is connected or able to be connected fluidically with the air channel (7).

6. The device according to one of the preceding claims, **characterized in that** at the front end of the outer housing part (2b) a brush attachment (2c) is provided which is, if applicable, divisible (2c', 2c").

7. The device according to one of the preceding claims, **characterized in that** the outer housing part (2a) and/or the inner housing part (2b) are constructed rotation-symmetrically with respect to the longitudinal axis of the extraction hood (2).

8. A device for processing a workpiece with a workpiece processing device (1), which has a drive unit (1a), a tool holder device (1b) and a tool (1c) able to be inserted in the tool holder device (1b), and with a device for the extraction of processing products arising during the processing of the workpiece, according to one of Claims 1 to 7.

9. The device according to Claim 8, wherein the drive unit (1a) is constructed for generating a rotary movement of the tool (1c).

10. The device according to Claim 8 or 9, wherein a machining tool, in particular a milling spindle, is provided as tool (1c).

11. The device according to one of Claims 8 to 10, wherein the tool (1c) and, if applicable, a part of the tool holder device (1b) is arranged in the space (6) between the front end of the inner housing part (2a) and the front end of the outer housing part (2b).

12. The device according to one of Claims 8 to 11, wherein the drive unit (1a) is connected in a substantially airtight manner with the cylinder piece (2a") of the inner housing part (2a).

## Revendications

1. Dispositif pour aspirer, parallèlement au processus, des produits d'usinage formés lors de l'usinage d'une pièce au moyen d'un dispositif d'usinage (1), comprenant une hotte d'aspiration à double paroi (2) qui présente une première partie de logement intérieure (2a) et à distance de celle-ci, une seconde partie de logement extérieure (2b), sachant que les deux parties de logement (2a, 2b) sont disposées coaxialement l'une à l'autre et partiellement l'une dans l'autre, de telle sorte qu'un canal d'air (7) est formé entre les deux parties de logement (2a, 2b), sachant que le canal d'air (7) présente une extrémité avant (7a) pouvant être alignée sur la pièce et une extrémité arrière (7b) opposée à cette extrémité, sachant qu'un écoulement (8) dirigé de l'extrémité avant (7a) à l'extrémité arrière (7b) peut être produit dans le canal d'air (7), et sachant que la hotte d'aspiration (2), en particulier la partie de logement intérieure (2a) de la hotte d'aspiration (2) est formée pour recevoir au moins une partie du dispositif d'usinage (1) et peut être reliée à celle-ci, **caractérisé en ce que** la partie de logement extérieure (2b) peut être séparée de la hotte d'aspiration (2) comme un tout ou en un ou plusieurs tronçon(s) partiel(s) (2b', 11, 12a, 12b), sachant que les tronçons séparables de la partie de logement extérieure (2b) peuvent passer d'une position formant un état fermé de la hotte d'aspiration (2) à une position formant un état ouvert de la hotte d'aspiration (2) et inversement, et sachant que les tronçons séparables (12a, 12b) peuvent pivoter respectivement sur un axe parallèle (C) ou orthogonal (A, B) à l'axe longitudinal de la hotte d'aspiration (2).

2. Dispositif selon la revendication 1, **caractérisé en ce qu'**un espace (6) pour recevoir un tronçon d'extrémité avant (1a, 1b) du dispositif d'usinage (1) est prévu entre l'extrémité avant de la partie de logement intérieure (2a) et l'extrémité avant de la partie de logement extérieure (2b).

3. Dispositif selon la revendication 1 ou 2, **caractérisé en ce que** la partie de logement intérieure (2a) présente une zone (2a'') avec un diamètre intérieur qui est légèrement supérieur au diamètre extérieur du dispositif d'usinage (1) dans cette zone, de telle sorte que la partie de logement intérieure (2a) est formée dans cette zone pour la réception avec ajustement précis de préférence d'une partie au moins du dispositif d'usinage (1).

4. Dispositif selon l'une des revendications précédentes, **caractérisé en ce que** la partie de logement extérieure (2b) présente un tronçon d'extrémité avant (2b') conique qui est adapté de préférence au contour du dispositif d'usinage (1) dans cette zone.

5. Dispositif selon l'une des revendications précédentes, **caractérisé en ce qu'**une chambre de déviation d'écoulement (2d) est prévue, laquelle est reliée ou peut être reliée en technique d'écoulement avec le canal d'air (7).

6. Dispositif selon l'une des revendications précédentes, **caractérisé en ce qu'**une couronne de brosses (2c) est prévue sur l'extrémité avant de la partie de logement extérieure (2b), laquelle peut être divisée le cas échéant (2c', 2c'').

7. Dispositif selon l'une des revendications précédentes, **caractérisé en ce que** la partie de logement intérieure (2a) et/ou la seconde partie de logement extérieure (2b) sont formées en symétrie de rotation par rapport à l'axe longitudinal de la hotte d'aspiration (2).

8. Dispositif destiné à l'usinage d'une pièce comprenant un dispositif d'usinage de pièces (1) qui présente une unité d'entraînement (1a), un dispositif de réception d'outil (1b) et un outil (1c) pouvant être placé dans le dispositif de réception d'outil (1b), ainsi qu'un dispositif destiné à l'aspiration de produits d'usinage formés lors de l'usinage de la pièce selon l'une des revendications 1 à 7.

9. Dispositif selon la revendication 8, dans lequel l'unité d'entraînement (1a) est conçue pour produire un mouvement de rotation de l'outil (1c).

10. Dispositif selon la revendication 8 ou 9, dans lequel est prévu un outil d'usinage, en particulier une broche de fraisage, en tant qu'outil (1c).

11. Dispositif selon l'une des revendications 8 à 10, dans lequel l'outil (1c) et le cas échéant une partie du dispositif de réception d'outil (1b) est/sont disposé(s) dans l'espace (6) entre l'extrémité avant de la partie de logement intérieure (2a) et l'extrémité avant de la partie de logement extérieure (2b).

12. Dispositif selon l'une des revendications 8 à 11, dans lequel l'unité d'entraînement (1a) est reliée essentiellement en étanchéité à l'air au tronçon de cylindre (2a'') de la partie de logement intérieure (2a).
